# EUROPÄISCHE PATENTSCHRIFT

(11) **EP 1 430 668 B1**
(45) Veröffentlichungstag und Bekanntmachung des Hinweises auf die Patenterteilung: **01.09.2010**
(21) Anmeldenummer: 02769941.2
(22) Anmeldetag: 12.09.2002
(51) Int. Cl.: H04L 12/64

(54) **FLEXIBLE UND AUFWANDSARME BEREITSTELLUNG VON DIENSTMERKMALEN FÜR SPRACHÜBERTRAGUNG IM PAKETNETZ**
FLEXIBLE AND ECONOMICAL PROVISION OF SERVICE CHARACTERISTICS FOR VOICE TRANSMISSION IN A PACKET NETWORK
MISE A DISPOSITION FLEXIBLE ET ECONOMIQUE DE CARACTERISTIQUES DE SERVICE EN MATIERE DE TRANSMISSION DE LA VOIX DANS UN RESEAU A COMMUTATION DE PAQUETS

(30) Priorität: 28.09.2001 DE 10147873
(43) Veröffentlichungstag der Anmeldung: 23.06.2004
(73) Patentinhaber: Nokia Siemens Networks GmbH & Co. KG, 81541 München (DE)
(72) Erfinder: LÖBIG, Norbert, 64291 Darmstadt (DE)
(86) Internationale Anmeldenummer: PCT/DE2002/003404
(87) Internationale Veröffentlichungsnummer: WO 2003/032591

(56) Entgegenhaltungen:
- US-A- 6 118 864
- US-A1- 2001 005 382

## Beschreibung

Die Erfindung betrifft ein Verfahren, eine Anordnung und ein System zur Umlenkung des Nutzdatenstroms im Paketnetz im Rahmen eines Dienstes, bei dem die Ressourcen zur Realisierung des Dienstes im Zuständigkeitsbereich einer Vermittlungsstelle bereitgestellt sind.

Aus dem Dokument US-A-6 118 864 (Chang Jack H et al) ist eine Kommunikationsplattform bekannt, die mit einem switched backbone wie dem gemeinhin als dem Internet bezeichneten Netz vernetzt ist. Diese ist konfiguriert, mit wenigstens einer Netzschnittstelle, wie zum Beispiel einer Nebenstellenanlage Private Branch Exchange (PBX), und einem Sprachkommunikationsmodul zu kommunizieren und diese zu verwalten, so dass Telekommunikationsdienste bereitgestellt werden, welche voiceover-IP Kommunikation zwischen oder unter Kommunikationsplattformbenutzern umfassen sowie Halten, Tansfer, weiterleitung, Konferenz und ähnliche Nebenstellenleistungsmerkmale. Die Kommunikationsplattform ist hierbei über den switched backbone mit anderen Kommunikationsplattformen vernetzt.

Bei der leitungsvermittelten Telephonie, für die auch das Akronym PSTN (public switched telephone network) verwendet wird, werden Teilnehmer des öffentlichen Fernsprechnetzes über Leitungen an die ihnen zugeordneten bzw. für sie zuständigen Vermittlungssysteme der öffentlichen Vermittlungstechnik angeschlossen. Über eventuell dem Vermittlungssystem vorgelagerte Teilnehmeranschlusskonzentratoren oder Teilnehmerzugangsnetze - häufig mit ihrem englischen Namen Access Networks bezeichnet - kann eine Zusammenführung von Teilnehmeranschlüssen erfolgen, deren Ergebnis jedoch in dem ebenfalls leitungsbasierten Anschluss des vermittelten Teilnehmers an das Vermittlungssystem besteht. Die Zusammenführung der Teilnehmeranschlüsse wird im allgemeinen mit Hilfe der Zeitmultiplextechnik, beispielsweise PCM (Pulse Code Modulation) oder SDH (Synchronous Digital Hierarchy) bewerkstelligt.

Im Rahmen der Zunahme von Diensten, die auf variablen Bitraten basieren, haben die Teilnehmer des öffentlichen Fernsprechnetzes zunehmend Zugriff auf Paketnetze, namentlich Zugriff auf das Internet über breitbandige Übertragungsnetze, wie z.B. LANs (Local Area Networks), Netze mit DSL-Anschlüssen (Digital Subscriber Line) oder Kabelnetze. Für Teilnehmer mit Zugriff auf ein Paketnetz bietet es sich an, die für den paketbasierten Zugriff notwendigen Leitungen bzw. Netze für den Telefonierverkehr mitzubenutzen, anstatt separate, schmalbandige Leitungen/Netze für Telephonie zu unterhalten.

Für PSTN Teilnehmer, die auf ein paketbasiertes Netz zugreifen, gibt es teilnehmernahe Netzzugangseinrichtungen, wie z.B. IADs (Integrated Access Devices) oder Kabelmodems, die das teilnehmerseitige Übertragungsnetz, beispielsweise LAN Local Area Network), Netz mit DSL-Anschlüssen(Digital Subscriber Line) oder Kabelnetz, terminieren. Teilnehmerseitig haben derartige Netzzugangseinrichtungen analoge oder ISDN (Integrated Services Digital Network) Anschlüsse; paketnetzseitig werden Telephoniesignalisierung und Nutzdaten mit gewissen Sicherungsprotokollen übertragen.

Daneben gibt es paketbasierte Endgeräte, z.B. auf dem Internet Protokoll (IP) basierte Telefone, mit eigens für den Einsatz im Paketnetz definierten Signalisierungsprotokollen, wie z.B. von der International Telecommunications Union (ITU) festgelegte H.323 Standard oder das SIP (Session Initiation Protocol) Protokoll gemäß dem IETF (Internet Engineering Task Force) Standard.

Bei dem Verbindungsaufbau und der Verbindungssteuerung von Telekommunikationsanwendungen über Paketnetze ist i.a. eine Vermittlungsstelle beteiligt, die z.B. Funktionen der Zugangskontrolle, der Signalisierung, der Verbindungssteuerung und Vergebührung ausführt. Diese Vermittlungsstelle kann z.B. durch einen entsprechend ausgestatteten Server im IP-Netz - häufig als Gatekeeper bezeichnet - oder eine für diese zusätzlichen Paketnetz-bezogenen Funktionen ausgerüstetes PSTN (public switched telephone network) Vermittlungssystem umfassen. Zusätzlich können dezentral Ressourcen für Steuerungs- oder Kontrollfunktionen in den Netzzugangseinrichtungen vorgesehen sein.

Bei herkömmlichen leitungsvermittelten PSTN/ISDN Verbindungen beruhen viele der Leistungsmerkmale darauf, dass der Nutzkanal in die Vermittlungsstelle geschaltet wird und dort bedarfsabhängig die benötigten vermittlungstechnischen Ressourcen bereitgestellt werden.

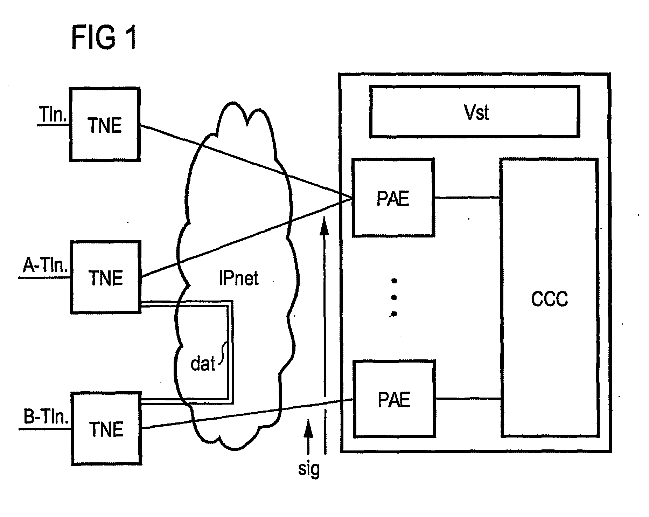

Eine Konstellation für Datenübertragung über ein Paketnetz IPnet ist in Figur 1 dargestellt. Bei der Verbindung von den Teilnehmern A-Tln und B-Tln werden die Nutzdaten dat direkt zwischen teilnehmernahen Einheiten TNE übertragen, an denen die beiden beteiligten Teilnehmer A-Tln und B-Tln angeschlossen sind. Die Signalisierungsinformationen sig werden getrennt von den Nutzdaten dat über eine Vermittlungsstelle Vst geführt. In dem Bild ist eine Vermittlungsstelle Vst mit einem Call Control Core CCC dargestellt, dem paketbasierte Anpassungseinheiten PAE vorgeschaltet sind. Da die Nutzdaten dat nicht in die Vermittlungsstelle Vst geführt werden, können herkömmlich, d.h. in PSTN Netzen, in der Vermittlungsstelle Vst bereitgestellte Ressourcen für bestimmte Dienstmerkmale nicht mehr dort zur Verfügung gestellt werden. Deshalb werden die vermittlungstechnische Ressourcen verlagert und im Paketnetz IPnet in Ressourcen-Server mit spezieller Funktionalität (z.B. Interaktiver Voice Response Server für interaktive Sprachein/ausgabe, Conference Server für Telefonkonferenzen) oder in teilnehmernahen Einrichtungen (z.B. Netzzugangseinrichtungen, Media Gateways etc.) bereitgestellt.

Werden in einer Verbindung Dienstmerkmale von der A-Seite oder B-Seite angefordert, so führt das häufig zu einer Umleitung bzw. zu einem geänderten Routing der Nutzdaten. Der Nutzdatenstrom zwischen A- und B-Teilnehmer ist im allgemeinen zumindest in einer Richtung aufzutrennen und dem jeweiligen Ressourcen-Server zuzuführen.

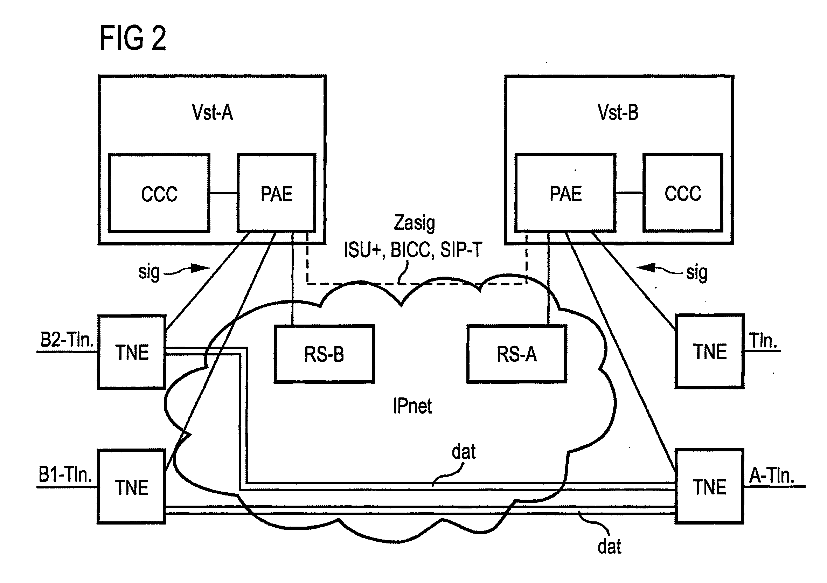

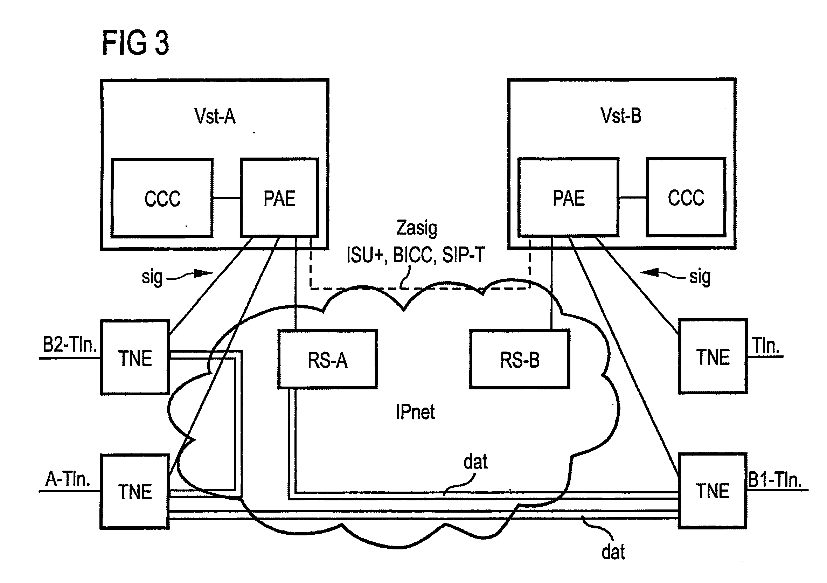

In Figur 2 und 3 sind zwei Beispiele für eine Umleitung des Nutzdatenstroms dat zur Realisierung von Telekommunikationsdiensten im Rahmen einer Paketnetz-basierten Verbindung von Teilnehmern dargestellt. Im Gegensatz zu Figur 1 sind die beteiligten Teilnehmer im Zuständigkeitsbereich unterschiedlicher, jeweils in der Nähe der Teilnehmer positionierten Vermittlungsstellen Vst-A und Vst-B. Die Signalisierungsdaten sig für die Teilnehmer B1-Tln und B2-Tln (Figur 2) bzw. A-Tln und B2-Tln (Figur 3) laufen von den Teilnehmern zugeordneten teilnehmernahen Einrichtungen TNE über die lokale Vermittlungsstelle Vst-A. Die Signalisierungsdaten sig der Teilnehmer A-Tln und Tln (Figur 2) bzw. B1-Tln und Tln (Figur 3) werden über die lokale Vermittlungsstelle Vst-B geführt. Die Vermittlungsstellen Vst-A und Vst-B weisen jeweils Paketanpassungseinrichtungen PAE und Call Control Core CCC auf. Zur Realisierung von Dienstmerkmalen sind die Vermittlungsstellen Vst-A und Vst-B jeweils mit einem Ressourcen-Server RS-B und RS-A (Figur 2) bzw. RS-A und RS-B (Figur 3) verbunden. Die Signalisierung zasig (zasig: für Zwischenamtsignalisierung) zwischen den Vermittlungsstellen Vst-A und Vst-B kann beispielsweise mit Hilfe eines für Paketnetzanwendungen erweiterten ISUP (ISDN user part) Protokolls, des BICC (bearer independent call control) Protokolls oder des T-SIP (telephone session initiation protocol) Protokolls erfolgen.

Beim Beispiel von Figur 2 wird der Nutzdatenstrom dat einer Verbindung zwischen den Teilnehmern A-Tln und B1-Tln für eine Verbindung zwischen den Teilnehmern A-Tln und B2-Tln umgelenkt. Man spricht in diesem Zusammenhang von einem call transfer, der beispielsweise zur Weitergabe eines Rufs eines Teilnehmers veranlasst wird. In Figur 3 ist eine Umlenkung des Nutzdatenstroms dat gezeigt, bei dem eine Verbindung zwischen den Teilnehmern A-Tln und B1-Tln unterbrochen wird, damit der Teilnehmer A-Tln mit dem Teilnehmer B2-Tln Rücksprache halten kann. Das Gespräch des Teilnehmers B1-Tln wird auf den Ressourcen-Server RS-A gelegt. Eventuell wird Musik oder ein Ansagetext gespielt, während der Teilnehmer Tln-B1 mit dem Ressourcen-Server RS-A verbunden ist. Nach Beendigung der Verbindung zwischen den Teilnehmern A-Tln und B2-Tln wird die ursprüngliche Verbindung wiederhergestellt.

Für die in den Figuren 2 und 3 dargestellten vermittlungstechnischen Dienstmerkmale muss die Vermittlungsstelle Vst-B mittels Zwischenamtsignalisierung zasig über das sich ändernde Routing informiert werden und ihre Paketadresszuordnung im stabilen Gesprächszustand mitlaufend eventuell sogar mehrfach ändern. Die Abwicklung von für einen Teilnehmer lokalen, teilnehmernahen Dienstmerkmalen führt zu zusätzlicher Signalisierungslast bei der Zwischenamtsignalisierung zasig, d.h. der Signalisierung zwischen den den Teilnehmern zugeordneten Vermittlungsstellen und ggf. weiteren zwischengelagerten Vermittlungsstellen, und zu zusätzlichen Anpassungen in den fernen Vermittlungsstellen. Die erforderlichen Anpassungen, wie Änderung der Paketnetzadressen, müssen von den fernen Vermittlungsstellen unterstützt werden, was eine sehr einschränkende Annahme an das Netz und seine Zwischenamtsignalisierung ist bzw. umgekehrt die Verfügbarkeit der jeweiligen Dienstmerkmale in Abhängigkeit zum jeweiligen Gesprächspartner bestimmt. Selbst wenn die fernen Vermittlungsstellen die mitlaufende Aktualisierung der Paketnetzadressen ihrer Nutzdatenströme unterstützen, so können sich doch durch Verzögerungen im Paketnetz und lange Laufzeiten bei der Zwischenamtsignalisierung negative Einflüsse auf die Dienstqualität ergeben.

Die Erfindung hat zur Aufgabe, die Realisierung von Diensten, bei denen das Routing des Nutzdatenstroms im Paketnetz verändert wird, bezüglich der Signalisierungslast zu verbessern.

Die Aufgabe wird durch die Gegenstände der Ansprüche 1, 9 und 12 gelöst.

Bei dem erfindungsgemäßen Verfahren wird ein Paketumsetzer im Zuständigkeitsbereich der Vermittlungsstelle bereitgestellt, d.h. der Paketumsetzer wird durch die Vermittlungsstelle gesteuert und kontrolliert. Im Rahmen des Dienstes, der eine Umlenkung des Nutzdatenstroms erfordert, wird der Nutzdatenstrom über den Paketumsetzer geführt. Die Anpassungen für die Umlenkung des Nutzdatenstroms werden in dem Paketumsetzer vorgenommen (Anspruch 1). Die Anpassungen können Änderungen von Adress- und Parameterinformationen wie z.B. IP Adressen bei IP Protokoll-basierten Netzen (Anspruch 2) beinhalten.

Das erfindungsgemäße Verfahren hat den Vorteil, dass nur die Vermittlungsstelle mit Zuständigkeit für die Ressourcen-Bereitstellung bei der Umlenkung des Nutzdatenstroms betroffen ist. Für die Ressourcen-Bereitstellung und die Anpassungen für die Umlenkung des Nutzdatenstroms ist nur eine Vermittlungsstelle zuständig. Die Zwischenamtsignalisierung, die evtl. getrennt von den Nutzdaten über ein paralleles Vermittlungsnetz geführt wird (Anspruch 3), wird dadurch erheblich reduziert.

Die mit den Änderungen im Zuge der Umlenkung des Nutzdatenstroms verbundene Signalisierung betrifft nur den Zuständigkeitsbereich der Vermittlungsstelle und führt so zu keiner zusätzlichen Zwischenamtsignalisierung. Ein weiterer Vorteil ist, dass die Umlenkung des Nutzdatenstroms nicht von den Leistungsmerkmalen anderer Vermittlungsstellen, die beispielsweise beim Verbindungsaufbau beteiligt sind, abhängt.

Bei einem Telekommunikationsdienst kann die Notwendigkeit der Führung des Nutzdatenstroms über einen Paketumsetzer anhand der Rufnummer eines beteiligten Endgeräts oder einer einer teilnehmernahen Einrichtung zugeordneten, Paketnetz-bezogenen Adressinformation bestimmt werden (Anspruch 4). Umlenkungen des Nutzdatenstroms beispielsweise im Rahmen einer Sprachverbindung zum Zwecke einer Konferenzschaltung oder einer automatischen Sprachausgabe (Anspruch 5) können so vorgenommen werden.

Die Funktionen des Paktumsetzers können in einem Server (Anspruch 6) oder in Netzzugangseinrichtungen (Anspruch 7) bereitgestellt werden.

Ein Paketumsetzer kann mit Hilfe von Programmstrukturen realisiert werden, die Funktionen von zwei mit der TDM (time division multiplexing) Seite gegeneinandergeschalteten Netzzugangseinrichtungen bzw. Netzübergangseinrichtungen für die Datenumsetzung zwischen TDM-basierten Netz und Paketnetz, z.B. Media Gateways, emulieren (Anspruch 9). Mit einer entsprechenden Hintereinanderschaltung bzw. Serienschaltung einer Paketnetz/TDM-Netz Netzzugangseinrichtung und einer TDM-Netz/Paketnetz Netzzugangseinrichtung lässt sich eine Paketumsetzung durchführen. Wie bei einem Netzübergang kann eine Zuordnung von Paketen zu TDM-Kanälen nach Maßgabe der Paketadresse der fernen teilnehmernahen Einrichtung erfolgen und eine daran anschließende Zuordnung zwischen TDM-Kanälen zu Paketen mit durch die Umlenkung gegebenen Zieladressen. Diese Umsetzung wird im Regelfall nicht mit zwei Netzzugangseinrichtungen bzw. Media Gateways realisiert werden, sondern mit Hilfe von Programmstrukturen, die die Funktionen für die Umsetzung bereitstellen bzw. emulieren. Der Paketumsetzer kann so z.B. aus einem Server mit paketbasierten Nutzdaten- und Signalisierungsschnittstellen bestehen, der sich bezüglich der Umsetzungsfunktionen wie eine Serienschaltung einer Paketnetz/TDM-Netz Netzzugangseinrichtung und einer TDM-Netz/Paketnetz Netzzugangseinrichtung verhält.

Pro Durchschaltung eines Nutzdatenstroms werden dann zwei Aufträge bzw. Auftragsfolgen von der Vermittlungsstelle an den Paketumsetzer signalisiert, wobei einer sich auf die Umsetzung eines Paketnetz-Datenstroms in einen TDM-Datenstrom und einer auf die Umsetzung von einem TDM-Datenstrom zu einem Paketnetz-Datenstrom bezieht (Anspruch 8).

Der erfindungsgemäße Paketumsetzer bildet mit der Vermittlungsstelle, von der er aus einstellbar und steuerbar ist, ein System (Anspruch 12), bei dem die systeminterne Signalisierung von eventueller Zwischenamtsignalisierung unabhängig ist. Zum Austausch von Signalisierungsinformationen zwischen der Vermittlungsstelle und dem Paketumsetzer können z.B. das MGCP (media gateway control protocol) Protokoll oder das von der ITU (international telecommunications union) standardisierte H.248 Protokoll verwendet werden (Anspruch 13). Das Signalisierungsprotokoll, mit der die Signalisierungsinformationen für eine erfindungsgemäße Umlenkung des Nutzdatenstroms übermittelt werden, kann unabhängig von den für die Zwischenamtsignalisierung verwendeten Protokollen festgesetzt werden. Das ist insofern günstig, als für die Zwischenamtsignalisierung teilweise Protokolle verwendet werden, die herstellerspezifisch erweitert wurden (z.B. eine erweiterte Version des ISUP (ISDN user part) Protokolls) oder Protokolle, bei denen Teile noch standardisiert werden (z.B. BICC (bearer independent call control) Protokoll). Zudem bietet das Verfahren die Möglichkeit, das für die Signalisierung zwischen Vermittlungsstelle und Paketumsetzer verwendete Protokoll herstellerspezifisch zu erweitern, ohne dass Signalisierungsprotokolle für die Zwischenamtsignalisierung geändert werden müssten (Anspruch 14). Auf diese Weise können durch Änderungen im Zuständigkeitsbereich der Vermittlungsstelle anforderungsabhängig Dienstmerkmale bei der Umlenkung beeinflusst oder neue Dienstmerkmale generiert werden. Dabei wirkt sich günstig aus, dass ein eventuell vorhandener Ressourcen-Server (Anspruch 15) für die Realisierung von Dienstmerkmalen ebenfalls in dem Zuständigkeitsbereich der Vermittlungsstelle fällt.

Die größtmögliche Flexibilität bei der Bereitstellung von Dienstmerkmalen wird dadurch erreicht, dass auf beiden Seiten einer Verbindung im Paketnetz ein Paketumsetzer vorgesehen ist, so dass auf A- und B-Seite Dienstmerkmale ohne Zwischenamtsignalisierung bereitgestellt werden können. Eine vorteilhafte Fortbildung des Erfindungsgegenstandes ist ein derartiges System, das mit zwei Teilsystemen aus einer Vermittlungsstelle und jeweils einem der Vermittlungsstelle zugeordneten Paketumsetzer gebildet ist, wobei zwischen den beiden Paketumsetzern der Teilsysteme ein Nutzdatenstrom über ein Paketnetz führbar ist (Anspruch 16).

Die Erfindung wird im folgenden im Rahmen von Ausführungsbeispielen anhand von Figuren näher erläutert. Es zeigen
Fig:1: Verbindung mit Nutzdatenübertragung über ein Paketnetz für zwei Teilnehmer im Zuständigkeitsbereich einer Vermittlungsstelle
Fig.2: Umleitung von Nutzdaten im Rahmen einer Verbindung mit Nutzdatenübertragung über ein Paketnetz (Call Transfer)
Fig.3: Umleitung von Nutzdaten im Rahmen einer Verbindung mit Nutzdatenübertragung über ein Paketnetz (Call Hold)
Fig.4: Erfindungsgemäß gesteuerte Nutzdatenumleitung mit Bereitstellung der Funktionen des Paketumsetzers in einem Server
Fig.5: Erfindungsgemäß gesteuerte Nutzdatenumleitung mit Bereitstellung der Funktionen des Paketumsetzers in einer teilnehmernahen Einrichtung
Fig.6: Erfindungsgemäß gesteuerte Nutzdatenumleitung bei einer Konferenzschaltung
Fig.7: Erfindungsgemäß gesteuerte Nutzdatenumleitung in Verbindung mit automatischer Sprachausgabe

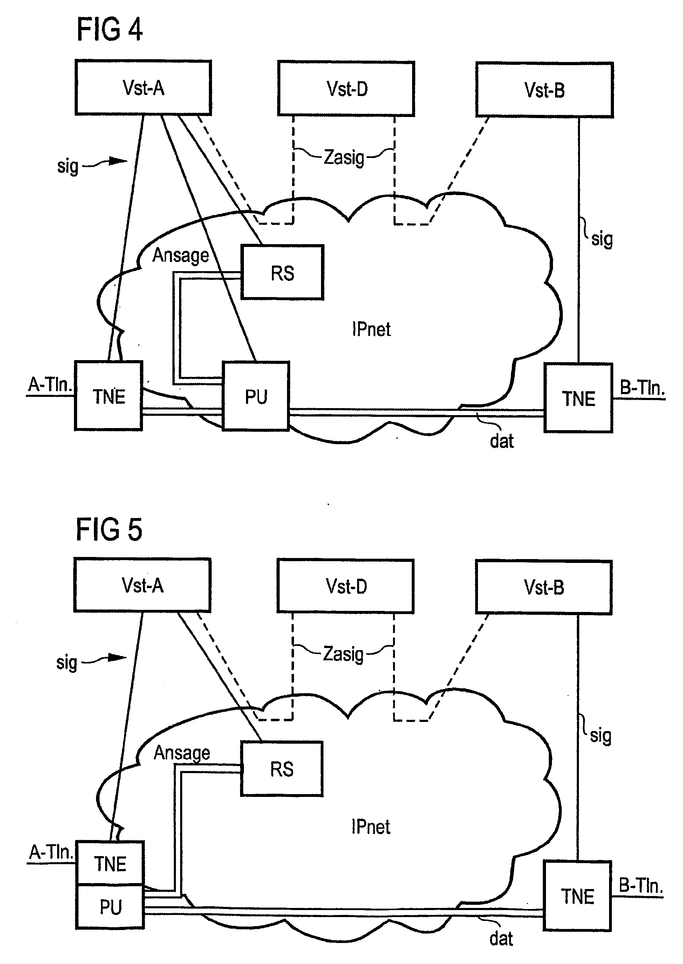

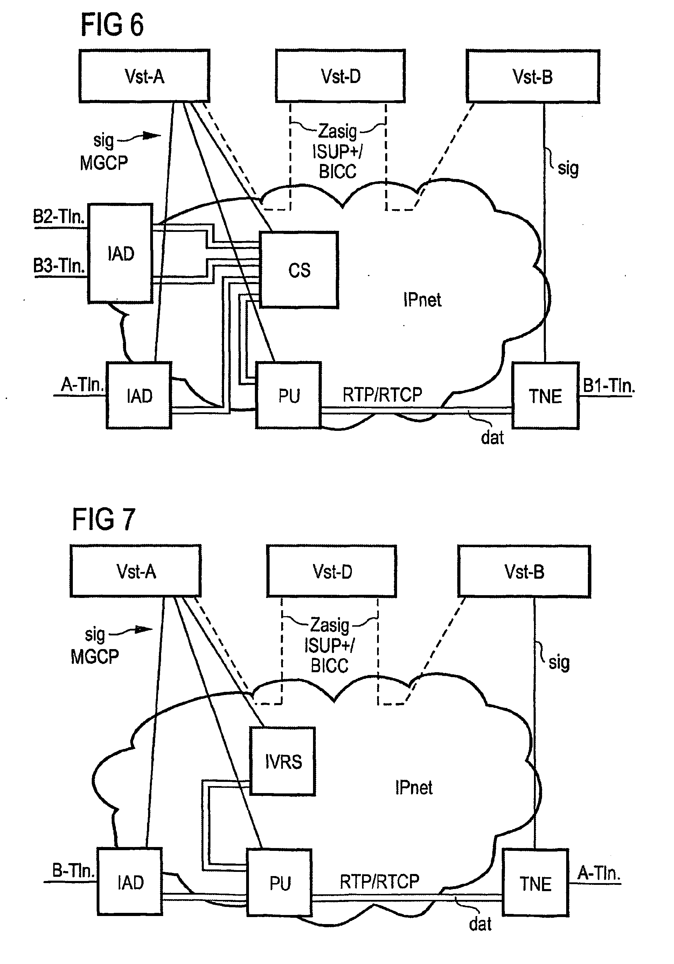

In den Figuren 4-7 sind zwei teilnehmernahe, lokale Vermittlungsstellen Vst-A und Vst-B sowie eine Durchgangsvermittlungsstelle Vst-D dargestellt. Im Zuständigkeitsbereich der Vermittlungsstelle Vst-A befindet sich jeweils ein Ressourcen-Server RS und ein Paketumsetzer PU. Bei dem Ressourcen-Server handelt es sich in Figur 6 um einen Conference Server CS und in Figur 7 um einen IVR (interactive voice response) Server IVRS. Die Zwischenamtsignalisierung in den in den Figuren 4-7 dargestellten Konstellationen läuft zwischen den lokalen Vermittlungsstellen Vst-A und Vst-B über die Durchgangsvermittlungsstelle Vst-D. Im Rahmen des Verbindungsaufbaus werden nur die für die Kommunikation mit dem Paketumsetzer PU benötigten Adressinformationen und Parameterinformationen zwischen den lokalen Vermittlungsstellen Vst-A und Vst-B ausgetauscht. Die initialen Einstellungen zur Kommunikation von fernen Teilnehmern mit dem Paketumsetzer PU bleiben bis zum Verbindungsabbau unverändert. Es erfolgt keinerlei Zwischenamtsignalisierung zasig zur Anpassung von durch den Paketumsetzer PU zur Kommunikation mit fernen Teilnehmern bestimmten Adressparametern und Verbindungsparametern in der laufenden Verbindung bei Abwicklung von rein lokal wirkenden Dienstmerkmalen. Außerhalb des Zuständigkeitsbereichs der Vermittlungsstelle Vst-A bleibt das Routing bei Aktivierung lokaler Dienstmerkmale unverändert.

Figuren 4 und 5 stellen das der Erfindung zugrunde liegende Konzept anhand einer Verbindung von Teilnehmern A-Tln und B-Tln, bei der von den Teilnehmern A-Tln und B-Tln über teilnehmernahe Einrichtungen TNE Sprachinformationen über ein Paketnetz IPnet übertragen werden. Die Verbindung wird A-teilnehmerseitig über eine Paketumsetzer PU geführt. Dabei ist der Paketumsetzer PU einmal in einem Server des Paketnetzes (Figur 4) und einmal bei der dem A-Teilnehmer zugeordneten teilnehmernahen Einrichtung TNE (Figur 5) realisiert. Der Zuständigkeitsbereich der lokalen Vermittlungsstelle Vst-A umfasst neben der dem A-Teilnehmer zugeordneten teilnehmernahen Einrichtung TNE den Paketumsetzer PU und einen Ressourcen Server RS. Die dem A-Teilnehmer zugeordnete teilnehmernahe Einrichtung TNE, der Paketumsetzer PU und der Ressourcen Server RS tauschen mit der lokalen Vermittlungsstelle Vst-A Signalisierungsinformationen sig aus, wobei in Figur 5 die Funktionen von Paketumsetzer PU und teilnehmernahen Einrichtungen TNE integriert sind. Der Nutzdatenstrom dat zwischen den Teilnehmern B-Tln und A-Tln wird A-teilnehmerseitig über den Paketumsetzer PU geführt. Erfindungsgemäß wird im Fall einer A-teilnehmerseitigen Auftrennung der Verbindung, um den B-Teilnehmer auf den Ressourcen-Server RS zu legen, der Nutzdatenstrom dat im Abschnitt zwischen der dem B-Teilnehmern zugeordneten teilnehmernahen Einrichtung TNE und dem Paketumsetzer PU nicht verändert. Die Umlenkung erfolgt im Zuständigkeitsbereich der lokalen Vermittlungsstelle Vst-A des A-Teilnehmers A-Tln. Im Rahmen der Umlenkung wird die Verbindung zwischen Paketumsetzer PU und A-Teilnehmer. A-Tln aufgetrennt und der Nutzdatenstrom dat vom Paketumsetzer PU zum Ressourcen-Server RS gelenkt bzw. in Figur 5 zum Ressourcen-Server RS weitergeleitet. Für die Umlenkung werden nur Signalisierungsinformationen sig im Zuständigkeitsbereich der lokalen Vermittlungsstelle Vst-A des A-Teilnehmers A-Tln zwischen Vermittlungsstelle Vst-A und den angeschlossenen Einheiten, also teilnehmernaher Einrichtung TNE des A-Teilnehmers, Ressourcen-Server RS und Paketumsetzer PU, ausgetauscht. Es wird keine Zwischenamtsignalisierung zasig zwischen den lokalen Vermittlungsstellen Vst-A und Vst-B über die Durchgangsvermittlungsstelle Vst-D im Zuge der Nutzdatenstrom-Umlenkung vorgenommen. Die Einstellungen zwischen teilnehmernaher Einrichtung TNE des B-Teilnehmers B-Tln und Paketumsetzer PU bleiben bei der Umschaltung unverändert.

In Figur 6 und 7 sind exemplarisch zwei Dienste dargestellt, bei denen durch erfindungsgemäße Steuerung der Nutzdatenumleitung die Zwischenamtsignalisierung zasig reduziert wird.

Das erste Beispiel (Figur 6) betrifft eine Konferenzschaltung mit Nutzdatenstromlenkung dat über einen Paketumsetzer PU. Durch Steuerung eines Vermittlungssystems Vst-A haben die Teilnehmer A-Tln, B2-Tln und B3-Tln über sogenannte IADs (integrated access devices) mit wenigen Teilnehmerports Zugang zu einem IP-basierten Paketnetz IPnet. Wegen der beschränkten Zahl von Teilnehmerport pro IAD ergeben sich häufig Konstellationen, wo Teilnehmer miteinander kommunizieren, die im Zuständigkeitsbereich desselben Vermittlungssystems sind, aber an unterschiedlichen IADs angeschlossen sind. Das ist in der Figur 6 dadurch verdeutlicht, dass auf der Seite des Vermittlungssystems Vst-A zwei IADs eingezeichnet sind, von denen eines mit dem Endgerät des Teilnehmers A-Tln und das andere mit den Endgeräten der Teilnehmer B2-Tln und B3-Tln verbunden ist. Im Zuständigkeitsbereich des Vermittlungssystems Vst-A befinden sich zudem zwei Server, von denen einer die Funktionen des Paketumsetzers PU und der andere Ressourcen für Konferenzschaltungen CS bereitstellt. Die Teilnehmer A-Tln, B2-Tln und B3-Tln verfügen beispielsweise über PSTN Endgeräte, die über xDSL (digital subscriber line) Strecken an die IADs angeschlossen sind. Die Signalisierung sig zwischen dem Vermittlungssystem Vst-A und den beiden IADs, dem Konferenz-Server CS sowie dem Paketumsetzer PU wird mit Hilfe des MGCP (media gateway control protocol) Protokolls realisiert. Für die Zwischenamtsignalisierung zasig zwischen dem Vermittlungssystem Vst-A, der Durchgangsvermittlungsstelle Vst-D und der B1-seitigen lokalen Vermittlungsstelle Vst-B wird das BICC (bearer independent control protocol) Protokoll oder eine herstellerspezifisch für die Übertragung von Nutzdaten dat über das Paketnetz IPnet angepassten Version des ISUP (ISDN user part) Protokolls ISUP+ verwendet. Die Übertragung des Nutzdatenstroms dat erfolgt mit Hilfe des RTP (real time protocol) und dem RTCP (real time control protocol), die häufig für die Übertragung von Sprachdaten im IP-Netz bzw. die Steuerung der Übertragung von Sprachdaten im IP-Netz verwendet werden.

Bei einer typischen Anwendung ruft der A-Teilnehmer A-Tln den sich außerhalb des Zuständigkeitsbereichs des Vermittlungssystems Vst-A befindenden B1-Teilnehmer Tln-B1 an. Auf Grund der Lage des B1-Teilnehmers veranlasst das Vermittlungssystem Vst-A bereits beim Verbindungsaufbau, dass der Nutzdatenstrom dat über den Paketumsetzer PU läuft. Im Laufe des Gesprächs entscheidet sich der A-Teilnehmer A-Tln, die weiteren Teilnehmer Tln-B2 und Tln-B3 in Form einer Audio-Konferenz miteinzubeziehen. Damit bewirkt er, dass die Nutzdatenströme dat von den Teilnehmern Tln-A, Tln-B1, Tln-B2 und B3 über den Konferenz-Server CS geführt werden. Diese Operation ist jedoch der lokalen Vermittlungsstelle Vst-B des Teilnehmers B1-Tln verborgen. Eventuell bekommt das Endgerät des B1-Teilnehmers B1-Tln die Tatsache einer Konferenzverbindung signalisiert, aber das Routing des Nutzdatenstroms dat bleibt aus Sicht der Vermittlungsstelle Vst-B unverändert. Im Steuerbereich des Vermittlungssystem Vst-A werden hingegen die Nutzdaten dat des B1-Teilnehmers B1-Tln von dem Paketumsetzer PU aus auf den Konferenz-Server CS geführt, ohne dass dafür Zwischenamtsignalisierung notwendig wäre.

In Figur 7 ist beispielhaft dargestellt, wie die Erfindung beim Betreiben eines Call Centers zur Verringerung der Signalisierungslast führt. Ein Operateur B-Tln des Call Centers ist über ein IAD mit Hilfe eines Vermittlungssystems Vst-A im Rahmen einer Sprachverbindung über ein IP-Netz IPnet mit einem Teilnehmer A-Tln verbunden. Zu Ansagezwecken und zur Abspielung von Standard-Informationsinhalten bzw. Dialogen ist ein IVR (interactive voice response) Server IVRS im Zuständigkeitsbereich des Vermittlungssystems Vst-A vorhanden. Der Operateur B-Tln entscheidet beispielsweise bei einem eingehenden Anruf ob, und wenn welche Standardinformation der Anrufer von IVR-Server IVRS vorgespielt bekommen soll bzw. welcher Dialog ablaufen soll. Bei einem Call Center wird im Regelfall der Zugriff auf IVR-Server IVRS sehr häufig vorkommen, was herkömmlich mit einer erheblichen Zwischenamtsignalisierung zasig verbunden ist. Figur 7 unterscheidet sich von der Konstellation aus Figur 6 lediglich dadurch, dass der Ressourcen-Server IVRS für automatische Sprachausgabe ausgerüstet ist und dass nur ein Teilnehmer B-Tln, der Operateur, im zuständigkeitsbereich des Vermittlungssystems Vst-A in der Figur 7 eingezeichnet ist.

Bei einer typischen Anwendung ruft der A-Teilnehmer A-Tln, der sich im Zuständigkeitsbereich der Vermittlungsstelle Vst-B befindet, den IVR-Server IVRS durch Wahl der Service-Rufnummer des Call Centers an. Auf Grund der Lage des A-Teilnehmers A-Tln außerhalb des Zuständigkeitsbereichs des Vermittlungssystems Vst-A wird bereits beim Verbindungsaufbau die Leitung des Nutzdatenstroms dat über den Paketumsetzer PU bewirkt. Vom IVR-Server IVRS aus wird bedarfsabhängig das Gespräch zwischen einem Operateur des Call Centers B-Tln und dem IVR-Server IVRS umgeschaltet, ohne dass Zwischenamtsignalisierung zasig außerhalb des Zuständigkeitsbereichs des Vermittlungssystems Vst-A mit der Durchgangsvermittlungsstelle Vst-D bzw. der A-seitigen lokalen Vermittlungsstelle Vst-B erforderlich wäre.

## Patentansprüche

1. Verfahren zur Umlenkung des Nutzdatenstroms (dat) im Paketnetz (IPnet) im Rahmen eines Dienstes, bei dem die Ressourcen zur Realisierung des Dienstes unter Steuerung und Kontrolle einer Vermittlungsstelle (Vst-A) bereitgestellt sind,
**dadurch gekennzeichnet,**
- **dass** mindestens ein Paketumsetzer (PU) unter Steuerung und Kontrolle der Vermittlungsstelle (Vst-A) bereitgestellt wird,
- **dass** im Rahmen des Dienstes der Nutzdatenstrom (dat) über den Paketumsetzer (PU) geführt wird, und
- **dass** in dem Paketumsetzer (PU) eine Paketumsetzung der Pakete des Nutzdatenstroms durchgeführt wird, wobei die Anpassungen für die Umlenkung des Nutzdatenstroms, wie die zur Umlenkung des Nutzdatenstromes (dat) erforderlichen Änderungen von Adress- und Parameterinformationen, in dem Paketumsetzer (PU) vorgenommen werden.

2. Verfahren nach Anspruch 1,
**dadurch gekennzeichnet,**
- **dass** die Nutzdaten über ein auf dem IP Protokoll basierenden Paketnetz (IPnet) übertragen werden und
- **dass** zur Umlenkung des Nutzdatenstroms (dat) erforderliche Änderungen von IP Adressen in dem Paketumsetzer (PU) vorgenommen werden.

3. Verfahren nach einem der vorhergehenden Ansprüche,
**dadurch gekennzeichnet,**
- **dass** Signalisierungsinformationen getrennt von den Nutzdaten über ein paralleles Vermittlungsnetz geführt werden.

4. Verfahren nach einem der vorhergehenden Ansprüche,
**dadurch gekennzeichnet,**
- **dass** bei einem Telekommunikationsdienst die Notwendigkeit der Führung des Nutzdatenstroms (dat) über den Paketumsetzer (PU) anhand der Rufnummer eines beteiligten Endgeräts oder einer einer teilnehmernahen Einrichtung (TNE) zugeordneten, Paketnetz-bezogenen Adressinformation bestimmt wird.

5. Verfahren nach einem der vorhergehenden Ansprüche,
**dadurch gekennzeichnet,**
- **dass** eine Umlenkung des Nutzdatenstroms (dat) im Rahmen einer Konferenzschaltung oder einer automatischen Sprachausgabe vorgenommen wird.

6. Verfahren nach einem der vorhergehenden Ansprüche,
**dadurch gekennzeichnet,**
- **dass** die Funktionen des Paketumsetzers (PU) in einem Server bereitgestellt werden.

7. Verfahren nach einem der vorhergehenden Ansprüche,
**dadurch gekennzeichnet,**
- **dass** die Funktionen des Paketumsetzers (PU) in teilnehmernahen Einrichtungen (TNE) oder Netzzugangseinrichtungen bereitgestellt werden.

8. Verfahren nach einem der vorhergehenden Ansprüche,
**dadurch gekennzeichnet,**
- **dass** der Paketumsetzer (PU) Programmstrukturen aufweist, die zur Paketumsetzung Funktionen von einer Hintereinanderschaltung einer Paketnetz/TDM-Netz Netzzugangseinrichtung und einer TDM-Netz/Paketnetz Netzzugangseinrichtung emulieren und
- **dass** pro Durchschaltung eines Nutzdatenstroms (dat) an dem Paketumsetzer (PU) von der Vermittlungsstelle (Vst-A) zwei Aufträge bzw. Auftragsfolgen signalisiert werden, wobei einer sich auf die Umsetzung eines Paketnetz-Datenstroms in einen TDM-Datenstrom (time division multiplexing) und einer auf die Umsetzung von einem TDM-Datenstrom zu einem Paketnetz-Datenstrom bezieht.

9. Paketumsetzer (PU) mit Mitteln zur Durchführung von Anpassungen für die Umlenkung von Nutzdatenströmen (dat) im Paketnetz (IPnet), wobei der Paketumsetzer (PU) Programmstrukturen aufweist, die zur Paketumsetzung Funktionen von einer Hintereinanderschaltung einer Paketnetz/TDM-Netz Netzzugangseinrichtung und einer TDM-Netz/Paketnetz Netzzugangseinrichtung emulieren.

10. Paketumsetzer (PU) nach Anspruch 9,
**dadurch gekennzeichnet,**
- **dass** die Funktionen des Paketumsetzers (PU) in einem Server mit Signalisierungsschnittstellen zur Verbindung mit einer Vermittlungsstelle realisiert sind.

11. Paketumsetzer (PU) nach Anspruch 9,
**dadurch gekennzeichnet,**
- **dass** die Funktionen des Paketumsetzers (PU) in teilnehmernahen Einrichtungen (TNE) oder Netzzugangseinrichtungen realisiert sind.

12. System mit einer Vermittlungsstelle (Vst-A) für die Umlenkung eines Nutzdatenstroms (dat) im Paketnetz (IPnet)
**dadurch gekennzeichnet,**
- **dass** ein Paketumsetzer (PU) nach einem der Ansprüche 9 bis 11 gegeben ist und mit der Vermittlungsstelle (Vst-A) logisch verbunden ist,
- **dass** ein standardisiertes Protokoll für den Austausch von Signalisierungsinformationen zwischen Vermittlungsstelle (Vst-A) und Paketumsetzer (PU) gegeben ist und
- **dass** der Paketumsetzer (PU) von der Vermittlungsstelle (Vst-A) einstellbar und steuerbar ist.

13. System nach Anspruch 12,
**dadurch gekennzeichnet,**
- **dass** zum Austausch von Signalisierungsinformationen zwischen der Vermittlungsstelle (Vst-A) und dem Paketumsetzer (PU) das MGCP Protokoll, das H.248 Protokoll oder das H.323 Protokoll gegeben ist.

14. System nach Anspruch 12 oder 13,
**dadurch gekennzeichnet,**
- **dass** das standardisierte Protokoll herstellerspezifisch erweitert ist.

15. System nach einen der Ansprüche 12 bis 14,
**dadurch gekennzeichnet,**
- **dass** das System mindestens einen Ressourcen-Server (RS) aufweist, der von der Vermittlungsstelle (Vst-A) einstellbar und steuerbar ist.

16. System, gebildet mit zwei Systemen nach einem der Ansprüche 12 bis 15, wobei zwischen den beiden Paketumsetzer (PU) der Systeme ein Nutzdatenstrom (dat) über ein Paketnetz (IPnet) führbar ist.

## Claims

1. Method for rerouting the useful data stream (dat) in a packet network (IPnet) in the course of a service, in which the resources for providing the service are provided under control and inspection of an exchange (Vst-A),
**characterized**
- **in that** at least one packet converter (PU) is provided under the control and inspection of the exchange (Vst-A),
- **in that** in the course of the service the useful data stream (dat) is routed via the packet converter (PU), and
- **in that** the packet converter (PU) performs packet conversion for the packets of the useful data stream, wherein the adaptations for rerouting the useful data stream, such as the address and parameter information changes which are required for rerouting the useful data stream (dat), are made in the packet converter (PU).

2. Method according to Claim 1,
**characterized**
- **in that** the useful data are transmitted via a packet network (IPnet) based on the IP protocol, and
- **in that** IP address changes which are required for rerouting the useful data stream (dat) are made in the packet converter (PU).

3. Method according to one of the preceding claims,
**characterized**
- **in that** signalling information is routed separately from the useful data via a parallel switching network.

4. Method according to one of the preceding claims,
**characterized**
- **in that** a telecommunication service involves the need for the useful data stream (dat) to be routed via the packet converter (PU) being determined using the telephone number of a participating terminal or a packet-network-related address information item associated with a subscriber device (TNE).

5. Method according to one of the preceding claims,
**characterized**
- **in that** the useful data stream (dat) is rerouted in the course of a multiparty service or an automatic voice output.

6. Method according to one of the preceding claims,
**characterized**
- **in that** the functions of the packet converter (PU) are provided in a server.

7. Method according to one of the preceding claims,
**characterized**
- **in that** the functions of the packet converter (PU) are provided in subscriber devices (TNE) or network access devices.

8. Method according to one of the preceding claims,
**characterized**
- **in that** the packet converter (PU) has programme structures which, for the packet conversion, emulate functions of a series connection of a packet-network/TDM-network network access device and a TDM-network/packet-network network access device, and
- **in that** for each useful data stream (dat) switched through on the packet converter (PU) the exchange (Vst-A) signals two orders or order sequences, one relating to the conversion of a packet network data stream into a TDM data stream (time division multiplexing) and one relating to the conversion of a TDM data stream into a packet network data stream.

9. Packet converter (PU) having means for making adaptations for the rerouting of useful data streams (dat) in a packet network (IPnet), wherein the packet converter (PU) has programme structures which, for packet conversion, emulate functions of a series connection of a packet-network/TDM-network network access device and a TDM-network/packet-network network access device.

10. Packet converter (PU) according to Claim 9,
**characterized**
- **in that** the functions of the packet converter (PU) are performed in a server having signalling interfaces for connection to an exchange.

11. Packet converter (PU) according to Claim 9,
**characterized**
- **in that** the functions of the packet converter (PU) are performed in subscriber devices (TNE) or network access devices.

12. Systemhaving an exchange (Vst-A) for the rerouting of a useful data stream (dat) in a packet network (IPnet),
**characterized**
- **in that** a packet converter (PU) according to one of Claims 9 to 11 is provided and is logically connected to the exchange (Vst-A),
- **in that** a standardized protocol is provided for the interchange of signalling information between exchange (Vst-A) and packet converter (PU), and
- **in that** the packet converter (PU) can be adjusted and controlled by the exchange (Vst-A).

13. System according to Claim 12,
**characterized**
- **in that** the MGCP protocol, the H.248 protocol or the H.323 protocol is provided for the interchange of signalling information between the exchange (Vst-A) and the packet converter (PU).

14. System according to Claim 12 or 13,
**characterized**
- **in that** the standardized protocol has been extended on a manufacturer-specific basis.

15. System according to one of Claims 12 to 14,
**characterized**
- **in that** the system has at least one resource server (RS) which can be adjusted and controlled by the exchange (Vst-A).

16. System, formed with two systems according to one of Claims 12 to 15, wherein the two packet converters (PU) of the systems can have a useful data stream (dat) routed between them via a packet network (IPnet).

## Revendications

1. Procédé de déviation du flux de données utiles (dat) dans le réseau de paquets (IPnet) dans le cadre d'un service, dans lequel les ressources pour la réalisation du service sont mises à disposition sous la commande et le contrôle d'un centre de commutation (Vst-A), **caractérisé en ce que**
- au moins un convertisseur de paquets (PU) est mis à disposition sous la commande et le contrôle du centre de commutation (Vst-A),
- le flux de données utiles (dat) passe par le convertisseur de paquets (PU) dans le cadre du service et
- une conversion des paquets du flux de données utiles est effectuée dans le convertisseur de paquets (PU), les adaptations en vue de la déviation du flux de données utiles, telles que les modifications d'informations d'adresses et de paramètres requises pour la déviation du flux de données utiles (dat), étant effectuées dans le convertisseur de paquets (PU).

2. Procédé selon la revendication 1, **caractérisé en ce que**
- les données utiles sont transmises sur un réseau de paquets (IPnet) basé sur le protocole IP et
- des modifications d'adresses IP nécessaires pour la déviation du flux de données utiles (dat) sont effectuées dans le convertisseur de paquets (PU).

3. Procédé selon l'une des revendications précédentes, **caractérisé en ce que**
- des informations de signalisation passent par un réseau de commutation parallèle séparément des données utiles.

4. Procédé selon l'une des revendications précédentes, **caractérisé en ce que**
- dans un service de télécommunication, la nécessité de faire passer le flux de données utiles (dat) par le convertisseur de paquets (PU) est déterminée à l'aide du numéro d'appel d'un terminal impliqué ou d'une information d'adresse associée à un dispositif proche de l'usager (TNE) et relative au réseau de paquets.

5. Procédé selon l'une des revendications précédentes, **caractérisé en ce que**
- une déviation du flux de données utiles (dat) est effectuée dans le cadre d'une conférence ou d'une émission vocale automatique.

6. Procédé selon l'une des revendications précédentes, **caractérisé en ce que**
- les fonctions du convertisseur de paquets (PU) sont mises à disposition dans un serveur.

7. Procédé selon l'une des revendications précédentes, **caractérisé en ce que**
- les fonctions du convertisseur de paquets (PU) sont mises à disposition dans des dispositifs proches de l'usager (TNE) ou des dispositifs d'accès réseau.

8. Procédé selon l'une des revendications précédentes, **caractérisé en ce que**
- le convertisseur de paquets (PU) présente des structures de programme qui, pour la conversion de paquets, émulent des fonctions d'un montage en cascade d'un dispositif d'accès réseau réseau de paquets / réseau TDM et d'un dispositif d'accès réseau réseau TDM /réseau de paquets et
- à chaque passage d'un flux de données utiles (dat) au niveau du convertisseur de paquets (PU), deux ordres resp. suites d'ordres sont signalés par le centre de commutation (Vst-A), l'un se référant à la conversion d'un flux de données de réseau de paquets en un flux de données TDM (time division multiplexing) et l'autre, à la conversion d'un flux de données TDM en un flux de données de réseau de paquets.

9. Convertisseur de paquets (PU) avec des moyens pour effectuer des adaptations en vue de la déviation de flux de données utiles (dat) dans le réseau de paquets (IPnet), le convertisseur de paquets (PU) présentant des structures de programme qui, pour la conversion de paquets, émulent des fonctions d'un montage en cascade d'un dispositif d'accès réseau réseau de paquets /réseau TDM et d'un dispositif d'accès réseau réseau TDM / réseau de paquets.

10. Convertisseur de paquets (PU) selon la revendication 9, **caractérisé en ce que**
- les fonctions du convertisseur de paquets (PU) sont réalisées dans un serveur avec des interfaces de signalisation pour liaison avec un centre de commutation.

11. Convertisseur de paquets (PU) selon la revendication 9, **caractérisé en ce que**
- les fonctions du convertisseur de paquets (PU) sont réalisées dans des dispositifs proches de l'usager (TNE) ou des dispositifs d'accès réseau.

12. Système avec un centre de commutation (Vst-A) pour la déviation d'un flux de données utiles (dat) dans le réseau de paquets (IPnet), **caractérisé en ce que**
- on a un convertisseur de paquets (PU) selon l'une des revendications 9 à 11 qui est relié logiquement au centre de commutation (Vst-A),
- on a un protocole standardisé pour l'échange d'informations de signalisation entre le centre de commutation (Vst-A) et un convertisseur de paquets (PU) et
- le convertisseur de paquets (PU) peut être réglé et commandé par le centre de commutation (Vst-A).

13. Système selon la revendication 12, **caractérisé en ce que**
- on a le protocole MGCP, le protocole H.248 ou le protocole H.323 aux fins de l'échange d'informations de signalisation entre le centre de commutation (Vst-A) et le convertisseur de paquets (PU).

14. Système selon la revendication 12 ou 13, **caractérisé en ce que**
- le protocole standardisé est élargi de manière spécifique au fabricant.

15. Système selon l'une des revendications 12 à 14, **caractérisé en ce que**
- le système comporte au moins un serveur de ressources (RS) qui peut être réglé et commandé par le centre de commutation (Vst-A).

16. Système constitué de deux systèmes selon l'une des revendications 12 à 15, un flux de données utiles (dat) pouvant passer entre les deux convertisseurs de paquets (PU) des systèmes via un réseau de paquets (IPnet).
